**Europäisches Patentamt**

**European Patent Office**

**Office européen des brevets**

(19)

(11) **EP 1 553 484 A2**

(12) **EUROPÄISCHE PATENTANMELDUNG**

(43) Veröffentlichungstag:
  **13.07.2005 Patentblatt 2005/28**

(51) Int Cl.⁷: **G06F 3/033**

(21) Anmeldenummer: **04105972.6**

(22) Anmeldetag: **22.11.2004**

(84) Benannte Vertragsstaaten:
  **AT BE BG CH CY CZ DE DK EE ES FI FR GB GR HU IE IS IT LI LU MC NL PL PT RO SE SI SK TR**
  Benannte Erstreckungsstaaten:
  **AL HR LT LV MK YU**

(30) Priorität: **07.01.2004 DE 102004001116**

(71) Anmelder: **ROBERT BOSCH GMBH**
  **70442 Stuttgart (DE)**

(72) Erfinder: **Kossira, Martin**
  **71672, Marbach am Neckar (DE)**

(54) **Verfahren zur Verbesserung der Animation der Cursor- beziehungsweise Listenbewegung in einem Menü**

(57)    Verfahren zur Verbesserung der Animation der Markierungsbewegungen und/oder Listenbewegung von insbesondere den Komfortfunktionen eines Kraftfahrzeuges zugeordneten Menüs, wie Kommunikation, Navigation, Klima und Entertainment, durch einen eine fühlbare, insbesondere mechanisch oder magnetisch erzeugte, Rasterung besitzenden und somit als Inkrementengeber ausgeführten Drehgeber, wobei die Information über eine Drehbewegung zumindest in der Auflösung der Rasterung geliefert wird und nach dem Aufrufen und Anzeigen des jeweiligen Menüs in einem im Armaturenbrett angeordneten Bildschirm im jeweiligen Menü Elemente ausgewählt oder Werteinstellungen vorgenommen werden, dadurch gekennzeichnet, dass die Geschwindigkeit der Markierung oder der Liste (10) dynamisch der Geschwindigkeit der Drehung des Drehgebers (3) angepasst wird.

Fig.1

**Beschreibung**

Technisches Gebiet

Die Erfindung betrifft ein Verfahren zur Verbesserung der Animation der Markierungsbewegungen und/oder Listenbewegung von insbesondere den Komfortfunktionen eines Kraftfahrzeuges zugeordneten Menüs, wie Kommunikation, Navigation, Klima und Entertainment, durch einen eine fühlbare, insbesondere mechanisch oder magnetisch erzeugte Rasterung besitzenden und somit als Inkrementengeber ausgeführten Drehgeber, wobei die Information über eine Drehbewegung zumindest in der Auflösung der Rasterung geliefert wird und nach dem Aufrufen und Anzeigen des jeweiligen Menüs in einem im Armaturenbrett angeordneten Bildschirm, im jeweiligen Menü Elemente ausgewählt oder Werteinstellungen vorgenommen werden.

Stand der Technik

Bei Kraftfahrzeugen ist es allgemein bekannt, dass diese mit Einrichtungen ausgestattet sind, die beispielsweise dem Komfort, der Information und der Unterhaltung sowohl des Fahrers als auch der Insassen des Kraftfahrzeuges dienen. Hierzu gehören unter anderem die Klimaanlage, das Autoradio verbunden mit einer Abspieleinheit für Musikkassetten und CDs und auch ein Navigationsgerät. Um diese Einrichtungen zu bedienen, sind für den Fahrer diesen Einrichtungen leicht zugängliche, die Einrichtungen zugeordnete Bedienelemente vorgesehen, die beim Autoradio zur Einstellung des Sendebereiches, der Lautstärke, auch unter Berücksichtigung der vorderen und hinteren aber auch der rechten und linken Lautsprecher, von Sendern, die Verkehrsnachrichten senden, zur Ausgabe von abgespeicherten Verkehrsinformationen und so weiter dienen. Analog ist eine Vielzahl von Bedienelementen zum Beispiel auch für die Klimaanlage notwendig, durch die die Einstellung der Temperatur sowohl im Bereich des Fahrers als auch des Beifahrers, der Sitzheizung für den Fahrer- und Beifahrersitz aber auch im Fond sowie eine aktive Sitzbelüftung vom sowie ebenfalls im Fond, um nur einige Varianten anzugeben, vorgenommen werden kann. Nachteilig ist hierbei jedoch stets, dass der Fahrer während des Fahrens die Bedienelemente oftmals ertasten muss, um die jeweilige, dem Komfort, der Information und der Unterhaltung zugeordnete Einzelkomponente zu bedienen, so dass es nicht ausbleibt, dass der Fahrer vom Verkehrsgeschehen abgelenkt wird, was sich negativ auf die Verkehrssicherheit im Straßenverkehr auswirkt.

Um diesen Nachteil zu vermeiden, kommen im Zuge der ständigen Weiterentwicklung von Kraftfahrzeugen Multifunktionselemente für Navigationssysteme, Bordcomputer, Audioanlagen und Kommunikationssysteme zur Anwendung, die einen zentralen Bedienknopf besitzen, der eine Betätigung durch Drehen, Drücken und eventuell zusätzlich seitliches Verschieben oder Kippen nach Art eines Joysticks ermöglicht. Dabei ist durch diese Multifunktionselemente ein Bordcomputer steuerbar, der verschiedene, zum Teil hierarchisch angelegte Eingabefelder besitzt, die an einem Bildschirm angezeigt werden, wobei derartige Multifunktionselemente ein einfaches Wechseln der Menüebene ermöglichen.

Im Zuge der ständigen Weiterentwicklung von modernen Kraftfahrzeugen ist aber auch ein System bekannt, das als "i-Drive" alle Innovationen zusammenfasst, die den Fahrer unterstützen. Dieses System teilt die Innovationen in zwei Zonen und zwar in die Fahrfunktionen und in die Komfortfunktionen auf. Während die Fahrfunktionen ergonomisch direkt um das Lenkrad angeordnet sind und somit ohne abgelenkt zu werden eine einfache Bedienung ermöglichen, befinden sich die Komfortfunktionen in der Mitte zwischen den Vordersitzen, insbesondere auf der Mittelarmlehne der Tunnelkonsole des Kraftfahrzeuges, so dass sie gut erreichbar sind. Mit einem zentral zwischen den Vordersitzen, insbesondere auf der Mittelarmlehne der Tunnelkonsole angeordneten Bedienelement wird beispielsweise ein Navigationssystem, ein CD-Wechsler oder ein Kommunikationssystem gesteuert, wobei das zugehörige, im Armaturenbrett angeordnete Control-Display und somit der Bildschirm unmittelbar im Blickfeld des Fahrers liegt. Dabei werden aus dem im Bildschirm angezeigten, beispielsweise der Navigation, der Kommunikation oder der Klimaanlage zugeordneten Menü, nachdem ein Aufruf erfolgte, die Menüpunkte also die Elemente ausgewählt, die zum Beispiel der Sitzbelüftung oder Sitzheizung zugeordnet sind.

Zur Erfüllung dieser Aufgabe kommen für die Menübedienung Drehgeber (Controller) zur Anwendung, die im Wesentlichen als Inkrementengeber ausgebildet sind. Diese besitzen somit eine fühlbare Rasterung. Dabei wird die Information über eine Drehbewegung auch nur in der Auflösung der Rasterung geliefert, die in der Regel jeweils erst nach dem Überwinden der mechanischen Schwelle zwischen den Einraststellungen vorliegt. Dementsprechend erfolgt die über den Drehgeber gesteuerte Positionierung einer Markierung innerhalb einer Liste auch gerastet. Mit leichter Zeitverzögerung zur Drehbewegung springt die Markierung von einem Element zum nächsten, also von einem Menüpunkt zum folgenden. Bei Darstellungen, in denen eine Markierung nicht auf einer statischen Linie bewegt wird, sondern die Liste selbst elementweise "springt", was zum Beispiel dann eintreten kann, wenn die Markierung den Rand des sichtbaren Bereiches der Liste erreicht hat, zeigt die so ebenfalls gerastete optische Rückkopplung die Bewegungsrichtung der Liste oftmals nur unzureichend. Die Bewegung der Liste mittels Zwischenschritten feiner zu animieren, führt zwar zu einer Verbesserung der Erkennung der Bewegungsrichtung, sie bringt aber Nachteile bei schnellen Drehbewegungen mit sich, da die einzelnen Animationsschritte eine gewisse Zeit benötigen.

Darstellung der Erfindung, Aufgabe, Lösung, Vorteile

Es ist Aufgabe der vorliegenden Erfindung ein Verfahren zur Verbesserung der Animation der Markierungsbewegung und/oder Listenbewegung von insbesondere den Komfortfunktionen eines Kraftfahrzeuges zugeordneten Menüs, entsprechend dem Oberbegriff von Anspruch 1 zu schaffen, durch das eine schnelle optische Rückkopplung an den Benutzer über die Bewegungsrichtung der Markierung oder der Liste ermöglicht wird, ohne den Benutzer bei schnellen Drehbewegungen auszubremsen, wobei zum besseren Anzeigen der Bewegungsrichtung der Markierung oder der Liste Zwischenschritte der Bewegung darzustellen sind.

Diese Aufgabe wird erfindungsgemäß durch ein Verfahren mit den im Anspruch 1 gekennzeichneten Merkmalen gelöst. Dadurch, dass die Geschwindigkeit der Markierung oder der Liste dynamisch der Geschwindigkeit der Drehung des Drehgebers angepasst wird, wird erreicht, dass ohne den Benutzer bei schnellen Drehbewegungen auszubremsen, an diesen eine schnelle optische Rückkopplung über die Bewegungsrichtung erfolgt, wobei gleichzeitig zwecks eines besseren Anzeigens der Bewegungsrichtung der Markierung oder der Liste Zwischenschritte der Bewegung dargestellt werden.

Es wird in einer bevorzugten Ausgestaltung eine feste Zeit $t_{anim}$ defmiert, nach der die Anzeige die jeweils vom Benutzer gewünschte Zielposition erreicht hat, wobei bei jeder Drehbewegung und somit bei jedem neuen Drehgebertick die Zielposition und der Zielzeitpunkt neu gesetzt und damit auch die Bewegungsgeschwindigkeit $v_{anim}$ angepasst wird.

Bei einem erfindungsgemäßen Drehgeber handelt es sich um einen zentral zwischen den Vordersitzen, insbesondere auf der Mittelarmlehne der Tunnelkonsole des Kraftfahrzeuges angeordneten oder gerätintegrierten Drehgeber, nämlich den Controller. Dieser Drehgeber hat eine Anzahl, z.B. 16 Rastereinstellungen (Impulse) die (beim Überwinden) klicken. Ein "Klick" ist ein Drehgebertick.

Erfolgt unter Berücksichtigung der dynamischen Anpassung der Geschwindigkeit der Markierung oder der Liste an die Geschwindigkeit der Drehung des Drehgebers ein Starten der Animation zum Zielzustand $x_{n+1}$ durch einen positiven Drehgebertick aus dem Ruhestand $x_n$ zum Zeitpunkt $t_0$, in dem der Marker sich auf der Position n befmdet, so ergibt sich die Endzeit der Animation mit $t_e = t_0 + t_{anim}$ und somit die Geschwindigkeit der Bewegung der Markierung oder der Liste mit:

$$v_{anim} = \frac{(x_{n+1} - x_n)}{t_{anim}}.$$

Tritt vor dem Ablauf der Endzeit $t_e$ der Animation zum Zeitpunkt $t_1$ ein neuer positiver Drehgebertick auf, so wird die Geschwindigkeit der Bewegung der Markierung oder der Liste auf der Basis des aktuellen Zustandes $x_1$ und des neuen Zielzustandes $x_{n+2}$ mit

$$v_{anim} = \frac{(x_{n+2} - x_1)}{t_{anim}}$$

neu berechnet. Tritt jedoch kein neuer Drehgebertick auf, so endet die Animation zur definierten festen Zeit $t_{anim}$.

Treten aber mehrere Drehgeberticks in der Animationsphase auf, so wird die Geschwindigkeit der Bewegung der Markierung oder der Liste erhöht und die Bewegung endet nach dem letzten Drehgebertick zur definierten festen Zeit $t_{anim}$ der Animation.

Ist die Bildrate für das Durchführen der Animation "fix", so resultiert aus der Erhöhung der Geschwindigkeit der Bewegung der Markierung oder der Liste ein entsprechendes Erhöhen der Schrittweite der Markierung oder der Liste pro Bild. Unter Markierung ist insbesondere ein Cursor zu verstehen.

Das Verfahren nach der Erfindung ist unter Berücksichtigung des Eintretens der durch die Erfindung erzielten Vorteile auch dazu geeignet, ein überproportionales Bewegungsverhalten darzustellen. Erfolgt ein überproportionales Bewegungsverhalten, so führen schnellere Drehungen des Drehgebers zu überproportional schnelleren Bewegungen der Markierung oder der Liste, indem Drehgeberticks, die innerhalb einer Zeit $t_{min1}$ nach dem vorangegangenen Drehgebertick auftreten, doppelt gezählt werden und somit die Geschwindigkeit der Bewegung der Markierung oder der Liste erhöht wird. Treten innerhalb einer Zeit von beispielsweise $t_{min2}$ ($t_{min2} < t_{min1}$) Drehgeberticks auf, so werden diese dreifach, bei einer Zeit von $t_{min3}$ vierfach und so weiter, gezählt. Entsprechend erhöht sich dann auch die Geschwindigkeit der Bewegung der Markierung oder der Liste.

Eine besonders vorteilhafte Ausgestaltung besteht darin, dass durch Anordnung des zentral zwischen den Vordersitzen, insbesondere auf der Mittelarmlehne der Tunnelkonsole des Kraftfahrzeuges angeordneten Drehgebers auf der Mittelarmlehne der Tunnelkonsole der Drehgeber zu seiner Bedienung sowohl dem Fahrer als auch dem Beifahrer zur Verfügung steht.

Obwohl durch die hohe Rate von Bewegungseingaben in Form von Drehgeberticks das erfindungsgemäße Verfahren besonders unter Verwendung von Drehgebern als Eingabemedium zur Anwendung geeignet ist, ist die Erfindung selbstverständlich auch bei allen anderen an sich bekannten Einrichtungen als Eingabemedium mit den durch das Verfahren erzielten Vorteilen zur Anwendung geeignet.

Weitere bevorzugte Ausgestaltungen der Erfindung ergeben sich aus den in den Unteransprüchen genannten Merkmalen.

Kurze Beschreibung der Zeichnungen

Nachstehend wird die Erfindung an Ausführungsbeispielen anhand der beigefügten Zeichnungen näher erläutert. Es zeigen:

Figur 1      eine schematische Darstellung des Drehgebers in Verbindung mit einem diesem zugeordneten Bildschirm (Fig. 1a);

Figur 2      eine skizzenhafte Darstellung einer einfachen Animation unter Verwendung des Drehgebers nach Figur 1 und

Figur 3      eine skizzenhafte Darstellung einer gegenüber Figur 2 verketteten Animation.

Bester Weg zur Ausführung der Erfindung

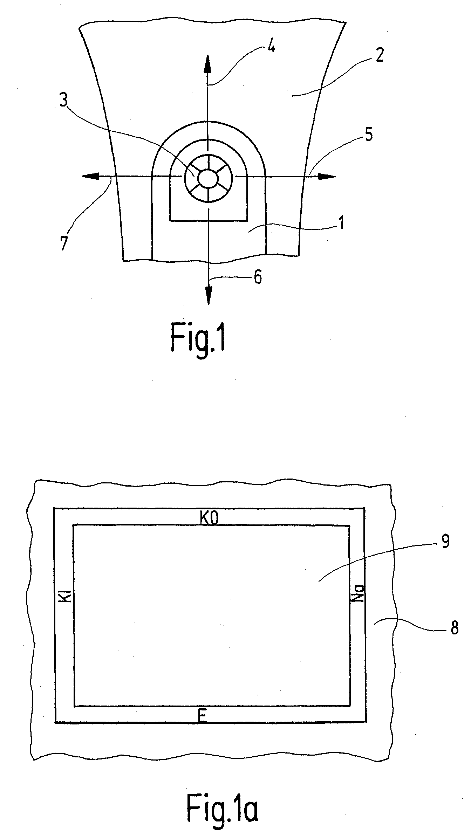

Die Figur 1 zeigt die Anordnung eines auf der Mittelarmlehne 1 einer Tunnelkonsole 2 eines Kraftfahrzeuges angeordneten, eine mechanische Rasterung besitzenden Drehgebers 3, dem Controller. Dabei kann dieser sowohl verschoben als auch gedreht werden. Während durch seine Verschiebung ein Aufrufen des jeweiligen Menüs vorgenommen wird, erfolgt durch das Drehen des Drehgebers 3 eine Auswahl der Elemente als Menüpunkte des jeweiligen Menüs. Die Verschiebung des Drehgeber 3 ist in vier um 90° zueinander versetzt verlaufende Richtungen 4, 5, 6, 7 durchführbar, von denen in Übereinstimmung mit den Menüangaben des im Armaturenbrett 8 vorgesehenen und in Fig. 1a schematisch angedeuteten Bildschirms 9 die Richtung 4 der Verschiebung der Kommunikation KO, die Richtung 5 der Navigation Na, die Richtung 6 dem Entertainment E und die Richtung 7 dem Klima Kl als jeweiliges Menü zugeordnet ist. Dabei ist der Bildschirm 9 zusätzlich zu dem ebenfalls im Armaturenbrett 8 angeordneten, nicht weiter dargestellten Display angeordnet, dem bei der großen Palette der zur Verfügung stehenden Angaben beispielsweise Angaben zum jeweiligen Benzinverbrauch entnehmbar sind.

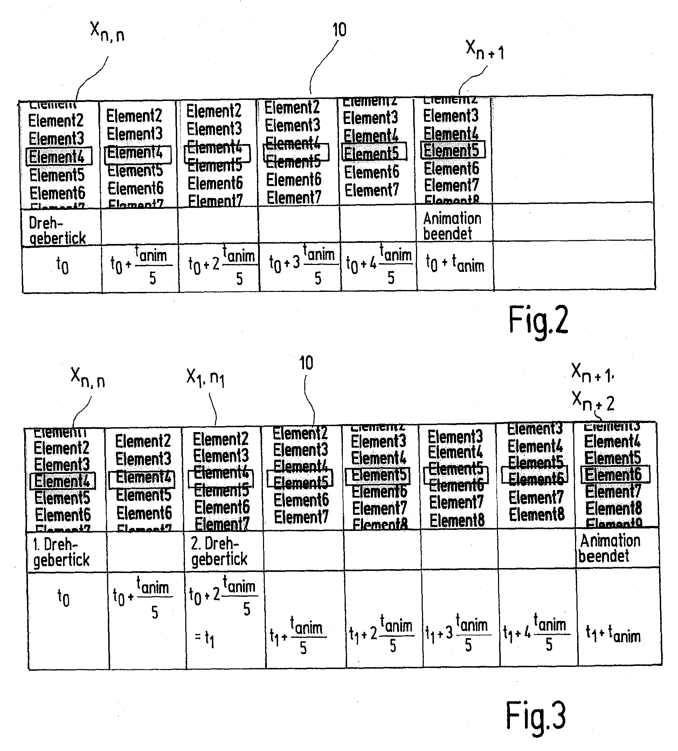

Die skizzenhafte Darstellung einer einfachen Animation nach Figur 2 geht von einem einzigen Drehgebertick des Drehgebers 3 nach Figur 1 aus. Dabei wird die Geschwindigkeit der Markierung beziehungsweise der Liste 10 an die Geschwindigkeit der Drehung des Drehgebers 3 durch das Defmieren einer festen Zeit $t_{anim}$ dynamisch angepasst. Das bedeutet, dass beim Durchlauf vom Element 4 zum Element 5, der in fünf Schritten erfolgt, die somit deutlich kleiner sind als ein Element, ausgehend von einem positiven Drehgebertick zum Zeitpunkt $t_0$, in dem der Marker sich auf der Position n befindet, die dem Element 4 entspricht und in dem ein Starten der Animation aus dem Ruhezustand $x_n$ zum Zielzustand $x_{n+1}$ erfolgt, sich die Endzeit der Animation mit $t_e = t_0 + t_{anim}$ ergibt, zu deren Zeitpunkt die Animation somit beendet ist. Ist die Endzeit $t_e$ erreicht

beziehungsweise die daraus resultierende Zeit abgelaufen, steht das Element 5 auf der Markierung beziehungsweise der Liste 10 zur Verfügung.

Gegenüber der einfachen Animation nach Figur 2 geht die skizzenhafte Darstellung gemäß Figur 3 von einer verketteten Animation aus, bei der während einer laufenden Animation ein Folge-Drehgebertick des Drehgebers 3 nach Figur 1, also vor Ablauf der Endzeit $t_e$ der Animation erfolgt und zwar zum Zeitpunkt $t_1$. Ausgehend davon, dass auch hier wieder bei einem positiven Drehgebertick zum Zeitpunkt $t_0$, in dem der Marker sich auf der dem Element 4 entsprechenden Position n befmdet, in der ein Starten der Animation aus dem Ruhezustand $x_n$ zum Zielzustand $x_{n+1}$ erfolgt, ergibt sich auch hier die Endzeit der Animation vom Element 4 zum Element 6 zunächst wieder mit $t_e = t_0 + t_{amin}$, so dass die Geschwindigkeit der Bewegung der Markierung oder der Liste 10 sich aus

$$v_{anim} = \frac{(x_{n+1} - x_n)}{t_{anim}}$$

ergibt. Wobei $x_n$ der Ruhezustand, $x_{n+1}$ der Zielzustand und $t_{anim}$ wieder die bei der dynamischen Anpassung der Geschwindigkeit der Markierung oder der Liste 10 an die Geschwindigkeit der Drehung des Drehgebers 3 definierte feste Zeit ist.

Da jedoch zum Zeitpunkt $t_1$, in dem der Marker sich auf einer zweiten Position $n_1$ befindet, ein Folge-Drehgebertick des Drehgebers 3 erfolgt, ergibt sich die Endzeit der Animation mit $t_e = t_1 + t_{anim}$ und die Geschwindigkeit der Bewegung der Markierung oder der Liste 10 mit

$$v_{anim} = \frac{(x_{n+2} - x_1)}{t_{anim}},$$

wobei $x_{n+2}$ der neue Zielzustand und $x_1$ der aktuelle Zustand ist.

**Patentansprüche**

1.   Verfahren zur Verbesserung der Animation der Markierungsbewegungen und/oder Listenbewegung von insbesondere den Komfortfunktionen eines Kraftfahrzeuges zugeordneten Menüs, wie Kommunikation, Navigation, Klima und Entertainment, durch einen eine fühlbare, insbesondere mechanisch oder magnetisch erzeugte, Rasterung besitzenden und somit als Inkrementengeber ausgeführten Drehgeber, wobei die Information über eine Drehbewegung zumindest in der Auflösung der Rasterung geliefert wird und nach dem Aufrufen und Anzeigen des jeweiligen Menüs in einem im Armaturenbrett angeordneten Bildschirm im jeweiligen Menü Elemente ausgewählt oder Werteinstellungen vorgenommen werden, **dadurch gekennzeichnet, dass** die Geschwindigkeit der Markierung oder der Liste (10) dynamisch der Geschwindigkeit der Drehung des Drehgebers (3) angepasst wird.

2. Verfahren nach Anspruch 1, **dadurch gekennzeichnet, dass** die Anpassung erfolgt, indem eine feste Zeit ($t_{anim}$) definiert wird, nach der die Anzeige die jeweils vom Benutzer gewünschte Zielposition erreicht hat, wobei bei jeder Drehbewegung und somit insbesondere bei jedem neuen Drehgebertick die Zielposition und der Zielzeitpunkt neu gesetzt und damit auch die Bewegungsgeschwindigkeit ($v_{anim}$) angepasst wird.

3. Verfahren nach nach einem der vorherigen Ansprüche, **dadurch gekennzeichnet, dass** beim Starten der Animation zum Zielzustand ($x_{n+1}$) durch einen positiven Drehgebertick aus dem Ruhezustand ($x_n$) zum Zeitpunkt ($t_0$), in dem der Markierung sich auf der Position (n) befmdet, sich die Endzeit der Animation mit $t_e = t_0 + t_{anim}$ und damit die Geschwindigkeit der Bewegung der Markierung oder der Liste (10) mit

$$v_{anim} = \frac{(x_{n+1} - x_n)}{t_{anim}}$$

ergibt.

4. Verfahren nach Anspruch 3, **dadurch gekennzeichnet, dass** beim Auftreten eines neuen positiven Drehgeberticks vor Ablauf der Endzeit ($t_e$) der Animation zum Zeitpunkt ($t_1$) die Geschwindigkeit der Bewegung der Markierung oder der Liste (10) auf der Basis des aktuellen Zustandes ($x_1$) und des neuen Zielzustandes ($x_{n+2}$) mit

$$v_{anim} = \frac{(x_{n+2} - x_1)}{t_{anim}}$$

neu berechnet wird.

5. Verfahren nach Anspruch 4, **dadurch gekennzeichnet, dass** beim Auftreten mehrerer Drehgeberticks in der Animationsphase die Geschwindigkeit der Bewegung der Markierung oder der Liste (10) erhöht wird und die Bewegung nach dem letzten Drehgebertick zur definierten festen Zeit ($t_{anim}$) der Animation endet.

6. Verfahren nach Anspruch 4, **dadurch gekennzeichnet, dass** die Animation zur defmierten festen Zeit ($t_{anim}$) nach dem letzten Drehgebertick endet, wenn kein neuer Drehgebertick auftritt.

7. Verfahren nach einem der Ansprüche 4 oder 5, **dadurch gekennzeichnet, dass** bei einem überproportionalen Bewegungsverhalten schnellere Drehungen des Drehgebers (3) zu überproportional schnelleren Bewegungen der Markierung oder der Liste (10) führen, indem Drehgeberticks, die innerhalb einer Zeit ($t_{min1}$) nach dem vorangegangenen Drehgebertick auftreten, doppelt gezählt werden und somit die Geschwindigkeit der Bewegung der Markierung oder der Liste (10) erhöht wird.

8. Verfahren nach Anspruch 7, **dadurch gekennzeichnet, dass** beim Auftreten von Drehgeberticks innerhalb einer Zeit von beispielsweise $t_{min2}$ ($t_{min2} < t_{min1}$) die Drehgeberticks dreifach gezählt werden und daraus eine weitere Erhöhung der Geschwindigkeit der Bewegung der Markierung oder der Liste (10) resultiert.

9. Verfahren nach Anspruche 8, **dadurch gekennzeichnet, dass** durch den Drehgeber (3) sowohl ein Aufrufen des jeweiligen Menüs, wie Kommunikation, Navigation, Klima und Entertainment, vorgenommen wird als auch eine Auswahl der Elemente als Menüpunkte des jeweiligen Menüs erfolgt.

10. Verfahren nach Anspruch 9, **dadurch gekennzeichnet, dass** das Aufrufen des jeweiligen Menüs durch den Drehgeber (3) durch seine Verschiebung und die Auswahl der Elemente und somit der Menüpunkte des jeweiligen Menüs durch Drehen des Drehgebers (3) vorgenommen wird.

11. Verfahren nach Anspruch 10, **dadurch gekennzeichnet, dass** die Verschiebung des Drehgebers (3) in vier um 90° zueinander versetzt verlaufende Richtungen (4, 5, 6, 7) erfolgt, denen jeweils ein den Komfortfunktionen des Kraftfahrzeuges zugeordnetes Menü, wie Kommunikation, Navigation, Klima und Entertainment, zugeordnet wird.

Fig.1

Fig.1a

$X_{n,n}$     10     $X_{n+1}$

| Element1 Element2 Element3 Element4 Element5 Element6 Element7 | Element2 Element3 Element4 Element5 Element6 Element7 | Element2 Element3 Element4 Element5 Element6 Element7 | Element2 Element3 Element4 Element5 Element6 Element7 | Element2 Element3 Element4 Element5 Element6 Element7 | Element2 Element3 Element4 Element5 Element6 Element7 Element8 | |
|---|---|---|---|---|---|---|
| Dreh-gebertick | | | | | Animation beendet | |
| $t_0$ | $t_0 + \dfrac{t_{anim}}{5}$ | $t_0 + 2\dfrac{t_{anim}}{5}$ | $t_0 + 3\dfrac{t_{anim}}{5}$ | $t_0 + 4\dfrac{t_{anim}}{5}$ | $t_0 + t_{anim}$ | |

**Fig.2**

$X_{n,n}$    $X_{1,n_1}$    10     $X_{n+1}$   $X_{n+2}$

| Element1 Element2 Element3 Element4 Element5 Element6 Element7 | Element2 Element3 Element4 Element5 Element6 Element7 | Element2 Element3 Element4 Element5 Element6 Element7 | Element2 Element3 Element4 Element5 Element6 Element7 | Element2 Element3 Element4 Element5 Element6 Element7 Element8 | Element3 Element4 Element5 Element6 Element7 Element8 | Element3 Element4 Element5 Element6 Element7 Element8 | Element3 Element4 Element5 Element6 Element7 Element8 Element9 |
|---|---|---|---|---|---|---|---|
| 1. Dreh-gebertick | | 2. Dreh-gebertick | | | | | Animation beendet |
| $t_0$ | $t_0 + \dfrac{t_{anim}}{5}$ | $t_0 + 2\dfrac{t_{anim}}{5}$ $= t_1$ | $t_1 + \dfrac{t_{anim}}{5}$ | $t_1 + 2\dfrac{t_{anim}}{5}$ | $t_1 + 3\dfrac{t_{anim}}{5}$ | $t_1 + 4\dfrac{t_{anim}}{5}$ | $t_1 + t_{anim}$ |

**Fig.3**